Europäisches Patentamt

European Patent Office

Office européen des brevets

(19)

(11) **EP 0 780 699 B1**

(12) **EUROPÄISCHE PATENTSCHRIFT**

(45) Veröffentlichungstag und Bekanntmachung des Hinweises auf die Patenterteilung:
**31.01.2001 Patentblatt 2001/05**

(51) Int Cl.[7]: **G01S 5/02**, G01S 1/04

(21) Anmeldenummer: **95810810.2**

(22) Anmeldetag: **21.12.1995**

(54) **Verfahren zum Orten von insbesondere frequenzagilen Sendern**

Method for positioning especially of frequency agile transmitters

Procédé de localisation en particulier d'émetteur à agilité de fréquence

(84) Benannte Vertragsstaaten:
**CH DE FR GB IT LI**

(43) Veröffentlichungstag der Anmeldung:
**25.06.1997 Patentblatt 1997/26**

(73) Patentinhaber: **C. PLATH GmbH**
**20097 Hamburg (DE)**

(72) Erfinder:
• **Aguilar, Marc**
**L-1720 Luxembourg (LU)**
• **Dolling, Wolfgang**
**D-22559 Hamburg (DE)**
• **Kropf, Peter**
**Sillery, Qc, G1T 1ES (CA)**
• **Wolf, Franz**
**D-22393 Hamburg (DE)**

(74) Vertreter:
**Roshardt, Werner Alfred, Dipl.-Phys. et al**
**Keller & Partner**
**Patentanwälte AG**
**Schmiedenplatz 5**
**Postfach**
**3000 Bern 7 (CH)**

(56) Entgegenhaltungen:
**DE-A- 2 753 575     DE-A- 3 601 372**

• **NEUES VON ROHDE UND SCHWARZ, Bd. 139,**
**1.Januar 1992, Seite 28/29 XP000565852 BROWN**
**B ET AL: "NETWORKED DF SYSTEM**
**DEVELOPED AND TESTED BY R&S CANADA"**

**Beschreibung**

**Technisches Gebiet**

Die Erfindung betrifft ein Verfahren zum Orten von insbesondere frequenzagilen Sendern mit mehreren räumlich verteilten Stationen mit gemeinsamer Zeitbasis. Weiter betrifft die Erfindung eine Anordnung zur Durchführung des Verfahrens.

**Stand der Technik**

Zur Durchführung von Funkkontrolldiensten werden geografisch verteilt an geeigneten Orten Peilstationen eingerichtet. Indem die Einfallsrichtung der lokal empfangenen Funksignale bestimmt wird, kann der entsprechende Sender goniometrisch geortet werden (Triangulation). Es sind bereits diverse Systeme zur Durchführung eines solchen Funkkontrolldienstes bekannt.

Die DE-OS 24 28 584 aus dem Jahre 1976 befasst sich mit einem Peilnetz mit Peilstationen für den vollautomatischen Betrieb. Zur Signalerfassung ist eine Horchzentrale mit einem Panoramaempfänger vorgesehen, welcher ein ganzes Frequenzband absucht bzw. überwacht. Wenn das Bedienpersonal auf dem Panoramaempfänger einen interessierenden Senden entdeckt, dann werden an die dezentralen Peilstationen Peilkommandos ausgesandt. Infolgedessen führen alle angesteuerten Peiler eine Peilung auf der von der Zentrale vorgegebenen Frequenz aus, d. h. die Einfallsrichtung (Azimut) des Signals wird bestimmt. Die so ermittelten Peilwerte werden jeweils über Modem an die Auswertezentrale übersandt, so dass die Triangulation ausgeführt und der vermutete Senderstandort angezeigt werden kann.

Dieses System ist (nach heutigem Massstab) nicht nur langsam, sondern setzt auch voraus, dass das Bedienpersonal in der Horchzentrale die interessierenden Signale als solche erkennen kann. Das Erkennen von frequenzstationären Sendern ist diesbezüglich unproblematisch; schwierig wenn nicht sogar unmöglich wird es bei den modernen frequenzagilen Sendern (wie z. B. Frequenzsprungsendern, kurz FH-Sendern).

Das Ortungssystem gemäss DE-36 01 372 C2 setzt einen zentralen Breitbandempfänger voraus, der vom Bedienpersonal überwacht wird. Um einen FH-Sender zu orten, werden ausgewählte Frequenzen an die Peilstationen kommandiert. Zudem wird ein Zeitfenster angegeben, innerhalb dessen eine einzelne Sprungfrequenz erwartet wird. Dem Verfahren liegt die Annahme zugrunde, dass FH-Sender innerhalb eines Frequenzbandes gleichmässig springen und jede Frequenz innerhalb eines bestimmten Zeitraums einmal angesprungen wird. Jede Peilstation überwacht die kommandierte Frequenz auf der Basis der vorgegebenen Zeitfenster. Wird ein Signal in einem Zeitfenster detektiert, dann wird die Peilung an die Zentrale übergeben. Zur Reduktion der Datenmenge wird auch vorgeschlagen, auf der kommandierten Frequenz mehrere Zeitfenster zu überwachen und - wenn in mehr als einem Zeitfenster die erwartete Peilung möglich war - die Ergebnisse dieser Zeitfenster in Form eines zusammengefassten einzelnen Peilergebnisses an die Auswertezentrale zu übermitteln. Dort werden die Peilergebnisse zu Einzel-Ortungsergebnissen ausgewertet und angezeigt. Ein FH-Sender erzeugt demzufolge eine ganze Punktwolke auf dem Anzeigeschirm (da bei jedem Anspringen einer Sprungfrequenz innerhalb des vorgegebenen Zeitfensters eine Ortung erfolgt).

Dieses System setzt eine manuelle Vorselektion voraus. Im weiteren ist sie auf einen ganz bestimmten Typ frequenzagiler Sender gerichtet.

Erwähnt sei im übrigen auch die Publikation "Vernetztes Peilsystem von Rohde und Schwarz Kanada entwickelt und erprobt", B. Brown, J.A. Langill, G. Suggitt, Neues von Rohde und Schwarz 139, Herbst 1992, Seiten 28, 29. Eine Mehrzahl von räumlich verteilten Suchpeilern kommunizieren über VHF-Funk oder UHF-, Bandspreiz-Uebertragung. Die Hauptstation kann jedem der Peiler zugeordnet werden. Aehnlich wie bei der DE-36 01 372 C2 werden die abgetasteten Rohdaten in den Peilstationen reduziert, bevor sie an die Hauptstation übermittelt werden. Die Hauptstation führt dann die Triangulation durch.

Die Ortung von FH-Sendern ist Ziel der DE-36 39 444 A1. Anstelle einer zentralen Signalerfassung und einer anschliessenden dezentralen Peilung wird vorgeschlagen, Erfassung und Peilung in den dezentralen Peilstationen durchzuführen. D. h. jede Peilstation macht den Such- und Peilbetrieb autonom und automatisch. Zu diesem Zweck sind in den Peilstationen Erfassungsempfänger vorgesehen, welche ihre Empfangsfrequenz schnell und wiederholt über einen vorgegebenen Frequenzbereich streichen lassen. Um die Ortung zu ermöglichen, müssen alle Erfassungsempfänger sowohl bezüglich Startzeit als auch bezüglich Frequenzänderungsgeschwindigkeit vollständig synchron laufen. Die verschiedenen Stationen erfassen somit die Peilwinkel (d. h. die Signalphasen) der empfangenen Signale in Abhängigkeit von der Zeit (bzw. in Abhängigkeit von der Frequenz, da sich die Erfassungsfrequenz ja mit der Zeit gleichmässig ändert). Die Ortung von FH-Sendern beruht offensichtlich auf der Annahme, dass mit einer gewissen Wahrscheinlichkeit die verschiedenen Sprungfrequenzen erfasst werden und bei mehreren Signalen aus der gleichen Richtung davon ausgegangen werden kann, dass sie zusammengehören und deshalb zur Ortung kombiniert werden dürfen. Es ergibt sich allerdings eine gewisse Fehlerquote dadurch, dass (z. B. wegen Störungen, nicht perfekter Synchronisation der Erfassungsempfänger etc.) nicht alle Teilstationen dieselben Sprungfrequenzen erfassen. Weiter sind Probleme bei azimutmässig überlagerten Sendersignalen vorgezeichnet.

Ein System mit integrierter Suchpeilung im Sinne der DE-36 39 444 A1 ergibt sich im übrigen auch aus dem Artikel "Hopper Trap System EA 2000 ortet Hopper und konventionelle Sender" von B. Ernst, U. Ullrich und W. Horn, Neues von Rohde und Schwarz, 127, Herbst 1989, Seiten 24 ff.

Die DE-40 14 407 A1 (Rohde und Schwarz GmbH & Co. KG) befasst sich mit einem Hochfrequenzpeiler mit diskreter Abtastung der Einzelantennen, welcher minimale Peilzeiten ermöglicht. Ein Einkanalpeiler ist zu diesem Zweck mit mehreren einzelnen Empfangsantennen ausgerüstet, welche nacheinander an einen analogen Hochfrequenzteil eines Empfangskanals angeschaltet werden. Das Signal wird digitalisiert und mit einem Transversalfilter verarbeitet. Der beschriebene Hochfrequenzpeiler kann z. B. bei einem schnellen Suchpeiler Anwendung finden. Eine weitere Art der Peilwinkelbestimmung, welche auf der Bestimmung der Häufigkeitsverteilung der Peilwinkel basiert, ergibt sich aus der DE-25 00 698 B2.

## Darstellung der Erfindung

Aufgabe der Erfindung ist es, ein Verfahren der eingangs genannten Art anzugeben, das zur vollautomatischen Ortung von beliebigen frequenzagilen (und natürlich auch von frequenzstationären) Sendern einsetzbar ist.

Gemäss der Erfindung besteht die Lösung darin, dass

a) jede dieser Stationen eigenständig eine Signalerfassung mittels eines Vielkanalempfängers durchführt, wobei alle lokal empfangbaren Signale eines ganzen Frequenzbereichs in Form digitaler Signalproben in einem Signalparameterraum erfasst werden, dass

b) in jeder Station die Signalproben mit Hilfe eines Mustererkennungsprogramms automatisch in Signalsegmente gruppiert werden und

c) die Sender durch Kombinieren gleichartiger Signalsegmente aus verschiedenen Stationen goniometrisch geortet werden.

Im Unterschied zum Stand der Technik wird bei der Erfindung nicht ein möglichst schnell durchlaufender Signalempfänger (nach dem Wobbel- oder Scan-Verfahren), sondern ein Vielkanalempfänger (z. B. FFT- oder Filterbankempfänger) verwendet. Dieser überwacht z. B. 800 bis 1000 Frequenzkanäle parallel (resp. gleichzeitig). Auf diese Weise wird ein ganzer Frequenzbereich (z. B. 100 KHz oder 1 MHz) von jeder Station ständig überwacht. Die Grösse des Bereichs kann eingestellt bzw. vorgegeben werden. Es gibt keine zentrale Signalerfassung mit nachfolgender Ansteuerung der dezentralen Peilstationen. Vielmehr wird diese Aufgabe von jeder Station für sich durchführt (allerdings mit Bezugnahme auf eine gemeinsame Zeitbasis). Die Signale werden in Form digitaler Signalproben erfasst. Eine Signalprobe kann z. B. durch den Erfassungszeitpunkt, die Frequenz und das Azimut (Einfallsrichtung) definiert sein. Es können aber auch weitere Messgrössen hinzukommen, wie z. B. die Signalamplitude, die Modulation o. dgl.

Die Signalproben (samples) können als Punkte in einem mehrdimensionalen Signalparameterraum verstanden werden. Sie werden mit Hilfe von Mustererkennungsprogrammen rechnerisch in Signalsegmente gruppiert. Ein Signalsegment wird z. B. durch eine Mehrzahl von im Signalparameterraum nahe beieinanderliegenden Signalproben gebildet. Es handelt sich im Prinzip um einen vermuteten Abschnitt des ganzen Signals. Dieser Abschnitt umfasst (im Fall frequenzagiler Sender) in der Regel mehrere Frequenzen und stellt quasi einen unterscheidungskräftigen "Fussabdruck" einer "Senderspur" dar. Auch hier besteht also ein Unterschied zu den bekannten Systemen, die nur ausgewählte Frequenzen überwachen bzw. verfolgen.

Es ist jedoch nicht zwingend erforderlich, dass alle Signalsegmente den zugehörigen Sender eindeutig identifizieren. Wichtig ist unter anderem, dass eine Vorverarbeitung der durch den Vielkanalempfänger generierten Datenmenge erfolgt und dass auf der Basis dieser Signalsegmente die Ortung mit grosser Wahrscheinlichkeit erfolgreich durchgeführt werden kann. Eine erfolgreiche Ortung setzt voraus, dass Signalsegmente verschiedener Stationen aufgrund ihrer Aehnlichkeit einander zugeordnet werden können und dadurch die Triangulation des Senders ermöglichen.

Vorzugsweise werden die Signalsegmente auf der Basis mehrerer vorgegebener Signaturparameter durch einen Satz von Signaturparameterwerten charakterisiert. Das Vergleichen bzw. Kombinieren der Signalsegmente erfolgt dann auf der Basis dieses Satzes von Signaturparameterwerten. Als Signaturparameter werden z. B. mehrere oder alle der folgenden Grössen verwendet:

$t_A$ =  Anfangszeitpunkt des Signalsegments
$t_E$ =  Endzeitpunkt des Signalsegments

$f_A$ = kleinste Frequenz des Signalsegments
$f_E$ = grösste Frequenz des Signalsegments
$\beta_A$ = kleinstes Azimut des Signalsegments
$\beta_E$ = grösstes Azimut des Signalsegments
$S_-$ = Summe der negativen Frequenzdifferenzen
$S_+$ = Summe der positiven Frequenzdifferenzen
n = Anzahl der Signalproben im Signalsegment
$\beta_m$ = mittlerer Wert des Azimuts der Signalproben im Signalsegment
h = mittlere zeitliche Aenderung des Frequenzverlaufs innerhalb des Signalsegments

Denkbar sind auch andere Signaturparameter wie z. B. Momente erster und zweiter Ordnung (Schwerpunkt, Streuung der Signalproben), mittlere Signalamplitude, Modulation u. a. m.

Gemäss einer bevorzugten Ausführungsform baut das Mustererkennungsprogramm ein Signalsegment dynamisch auf, indem - ausgehend von einer z. B. beliebig gewählten Signalprobe - sukzessive weitere Signalproben assoziiert werden. Die Gruppierung kann durch Auswerten eines Abstandskriteriums im Signalparameterraum (welcher z. B. durch Azimut, Frequenz und Zeit aufgespannt wird) erfolgen. Es können zusätzlich oder alternativ ausgewählte Signaturparameter als Assoziierungskriterien berücksichtigt werden.

Das Abstandskriterium kann statisch oder dynamisch sein. Im zweitgenannten Fall kann es z. B. so programmiert sein, dass es sich im Verlauf des Segmentationsprozesses anpasst (entsprechend den Merkmalen des bereits bestehenden Teils der Segmente).

Das Mustererkennungsprogramm kann z. B. so ausgebildet sein, dass jede Signalprobe höchstens einem Segment zugeordnet wird. Bei Mehrdeutigkeit wird z. B. die Zuordnung aufgrund des geringsten Abstandes zu den im Aufbau befindlichen Signalsegmenten durchgeführt. Soweit keine Zuordnung möglich ist, kann die Signalprobe als erstes Element eines neuen Signalsegments verstanden werden. Denkbar ist aber auch, dass eine Signalprobe mehreren (aber mindestens einem) Signalsegment zugeordnet wird. Auf diese Weise wird sichergestellt, dass bei Signalkollisionen keine falschen Lücken in den Segmenten entstehen. Die Auflösung der Signalkollision kann in einem späteren Verarbeitungsschritt unter Beizug der Signalsegmente anderer Stationen erfolgen. Wenn z. B. eine Station zwei Signale azimutmässig nicht auflösen kann, dann wird sich in den meisten Fällen eine andere Station finden lassen, bei welcher die Kollision nicht stattgefunden hat.

Vorzugsweise werden die Signalsegmente in einer Datenbank der jeweiligen Station gespeichert. Eine solche Datenbank kann z. B. auch dazu dienen, nach erfolgreicher Ortung mehrere Segmente zu Segmentgruppen zu kombinieren und später eine Senderidentifikation bzw. -klassifikation zu ermöglichen. Wenn z. B. zu einem späteren Zeitpunkt ein Sender gefunden wird, der einem bereits bekannten Segment bzw. einer Segmentgruppe zugeordnet werden kann, dann kann z. B. auf eine Ortsverschiebung des Senders zurückgeschlossen werden. Ebenfalls ist es möglich, die Sender zu identifizieren, die kommunikationstechnisch zusammengehören. D. h. es können "Senderverbände" identifiziert werden.

Signalsegmente, deren Satz von Signaturparameterwerten noch keine eindeutige Zuordnung zu entsprechenden Signalsegmenten anderer Stationen ermöglicht, können in einer nachgeschalteten Verarbeitungsstufe "punktweise" (d. h. Signalprobe für Signalprobe) mit anderen Signalsegmenten korreliert werden. Diese Nachbearbeitung ist nicht nur rechenaufwendiger (als die Zuordnung auf der Basis von Signaturparameterwerten), sondern setzt auch eine umfangreiche Datenübertragung voraus, da alle Signalproben eines bei einer ersten Station erfassten Segments zu einer zweiten Station des zu korrelierenden Segments übertragen werden müssen. Hier liegt auch ein gewichtiger Vorteil der Charakterisierung von ganzen Signalsegmenten durch einige wenige Signaturparameterwerte: Das Kombinieren einer grösseren Zahl von Signalproben kann auf der Basis von wenigen charakteristischen Werten (mit einer Erfolgschance von z. B. 90%) und bei beschränkter Datenübertragungskapazität erfolgen. Nur für eine geringe Anzahl von Segmenten ist die Uebertragung einer grossen Datenmenge zur Durchführung der Ortung mittels "punktweiser" Korrelation erforderlich.

Das Mustererkennungsprogramm kann auch nach einem anderen Prinzip als dem erwähnten arbeiten. So können z. B. die Signalproben eines vorgegebenen Signalraumvolumens in mehreren unterschiedlichen Richtungen in Räume niedrigerer Dimension projiziert und aus den Häufigkeitsverteilungen in diesen Unterräumen Signaturparameterwerte ermittelt werden. Je nach Projektionsrichtung wird sich dabei die Verteilung der projizierten Signalproben ändern. Wird z. B. die durch Zeit und Frequenz aufgespannte Ebene (Signalraum) auf Achsen (Unterräume) unterschiedlicher Orientierung projiziert, dann lassen sich bei geeigneter Projektionsrichtung z. B. minimale oder maximale Streuungen realisieren. Eine gerade Linie, die in Linienrichtung projiziert wird, konzentriert sich in der Projektion in einen Punkt. Senkrecht zur genannten Projektionsrichtung hat die Linie die maximale Länge (und damit die geringste Dichte der projizierten Punkte).

Weitere Mustererkennungsverfahren können z. B. aus der Bildverarbeitungstechnik (Videoüberwachung von Industrieprozessen, Robotersteuerung u. dgl.) übernommen werden.

Vorzugsweise sind die Rechner der Stationen in der Art eines dynamischen Netzwerks verbunden. Zu diesem Zweck sind alle Stationen mit einem Programm zur Durchführung der Ortung ausgerüstet. Ein Steuerprogramm (welches z. B. in einer der genannten Stationen oder in allen Stationen verteilt in Kooperation abläuft) bestimmt den zur Ortung erforderlichen Rechenaufwand (z. B. auf der Basis der Anzahl ermittelter Signalsegmente), teilt den Signalparameterraum in Teilräume auf und weist die Durchführung der Ortung der in den verschiedenen Teilräumen detektierten Sender unterschiedlichen Stationen zu. Zur Durchführung der Ortung wird eine bestimmte Station selbständig Kontakt mit den von ihr gewählten übrigen Stationen aufnehmen. D. h. die Station kontrolliert selbst den Datenaustausch mit den anderen Stationen für den ihr zugeteilten Teilraum. Die Ortung findet somit nicht in einem einzigen Rechner (sei es in einer Zentrale oder einer Peilstation) statt, sondern möglichst verteilt auf die Stationen des Netzes.

Eine Anordnung zur Durchführung des Verfahrens verfügt über eine Mehrzahl von räumlich verteilten, über ein Kommunikationssystem in Verbindung stehenden Stationen mit synchronisierten Uhren (zur Schaffung einer gemeinsamen Zeitbasis für die Bestimmung resp. Erfassung der Peilzeitpunkte), wobei jede Station

a) einen Vielkanalempfänger mit einer Vielzahl von parallel arbeitenden Kanälen aufweist, um alle lokal empfangbaren Signale eines ganzen Frequenzbereichs in Form digitaler Signalproben in einem Signalparameterraum zu erfassen,

b) einen Speicher zum Abspeichern der Signalproben,

c) einen Rechner mit einem Mustererkennungsprogramm, welches die Signalproben automatisch in Signalsegmente gruppiert,

d) ein Programm zur Charakterisierung der Signalsegmente mittels Signaturparameterwerten,

e) einen Speicher für Signalsegmente und Signaturparameterwerte

f) und einen Rechner mit einem Programm, welches Signalsegmente verschiedener Stationen mit im wesentlichen gleichen Signaturparameterwerten einander zuordnet und die goniometrische Ortung der Sender durchführt.

Weitere bevorzugte Ausführungsformen und Merkmalskombinationen ergeben sich aus der nachfolgenden Detailbeschreibung und der Gesamtheit der Patentansprüche.

**Kurze Beschreibung der Zeichnungen**

Die zur Erläuterung der Ausführungsbeispiele verwendeten Zeichnungen zeigen:

Fig. 1    Eine schematische Darstellung einer Anordnung zum Orten von frequenzagilen Sendern;

Fig. 2    ein Blockschaltbild einer einzelnen Station;

Fig. 3    eine schematische Darstellung von möglichen Frequenzmustern;

Fig. 4    eine schematische Darstellung zur Erläuterung des Mustererkennungsprogramms auf der Basis des dynamischen Segmentaufbaus;

Fig. 5    eine schematische Darstellung einer Signalkollision und deren mögliche Auflösung;

Fig. 6    eine schematische Darstellung des Prinzips der Mustererkennung mittels Signalprojektion;

Fig. 7    eine Darstellung zur Erläuterung der Grenzwerte für Azimut-gestützte Kombination.

Gleiche Teile sind in den Figuren mit gleichen Bezugszeichen versehen.

**Wege zur Ausführung der Erfindung**

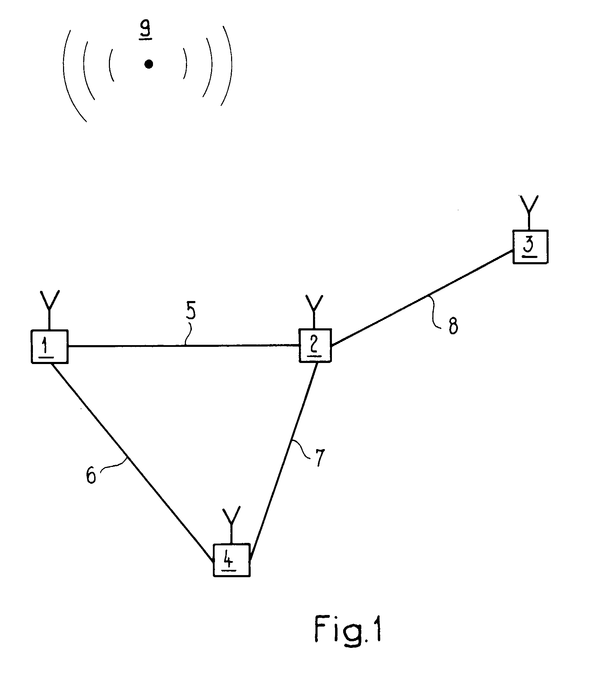

Fig. 1 zeigt eine schematische Darstellung einer erfindungsgemässen Anordnung zur Ortung eines Senders 9. Im vorliegenden Beispiel sind vier Stationen 1, 2, 3, 4 mit Peilantennen vorgesehen. Sie stehen z. B. über die vier dargestellten Kommunikationsverbindungen 5, 6, 7, 8 in Kontakt. Die Kommunikationsverbindungen 5, 6, 7, 8 können Standleitungen, Leitungen des öffentlichen Telefon- bzw. Datendienstes, oder auch Funkverbindungen sein. Es ist dabei nicht erforderlich, dass alle Stationen 1, 2, 3, 4 direkt miteinander in Verbindung stehen. Die Stationen 1 und 4 können im vorliegenden Beispiel durch Vermittlung der Station 2 mit der Station 3 in Kontakt kommen. Das Kommunikationsnetzwerk soll jedoch so ausgestaltet sein, dass jede Station (direkt oder vermittelt) Informationen an jede andere senden kann.

Die Stationen 1, 2, 3, 4 sind z. B. innerhalb der Grenzen eines Landes räumlich verteilt angeordnet. In der Praxis sind mindestens drei Peilstationen erforderlich. Je nach jeweiliger Topografie muss die Zahl der Stationen u. U. grösser sein.

Vorzugsweise sind alle Stationen 1, 2, 3, 4 im wesentlichen gleich ausgebildet, so dass keine eigenständige Zentrale erforderlich ist. Vielmehr soll die Kontrollfunktion über das Netzwerk und die Ortung von jeder Station aus (ev. sogar dynamisch) vorgenommen werden können. D. h. das was bei früheren Systemen die Zentrale war, kann hier in jeder Station verwirklicht sein. Dies hat den Vorteil, dass das System selbst dann nicht zusammenbricht, wenn ein Betriebsunterbruch in derjenigen Station eintritt, von welcher aus im Moment des Betriebsunterbruchs die Netzwerksteuerung und Ortungskoordination erfolgt. Jede andere Station kann dann die Netzwerksteuerung und Ortungskoordination übernehmen. (Das System ist damit gegenüber solchen Ausfällen "fehlertolerant".) Ein weiterer Vorteil ist die Modularität des Systems. Das Netzwerk kann durch eine Station ergänzt werden, ohne dass eine vollständige Neukonfiguration erforderlich ist.

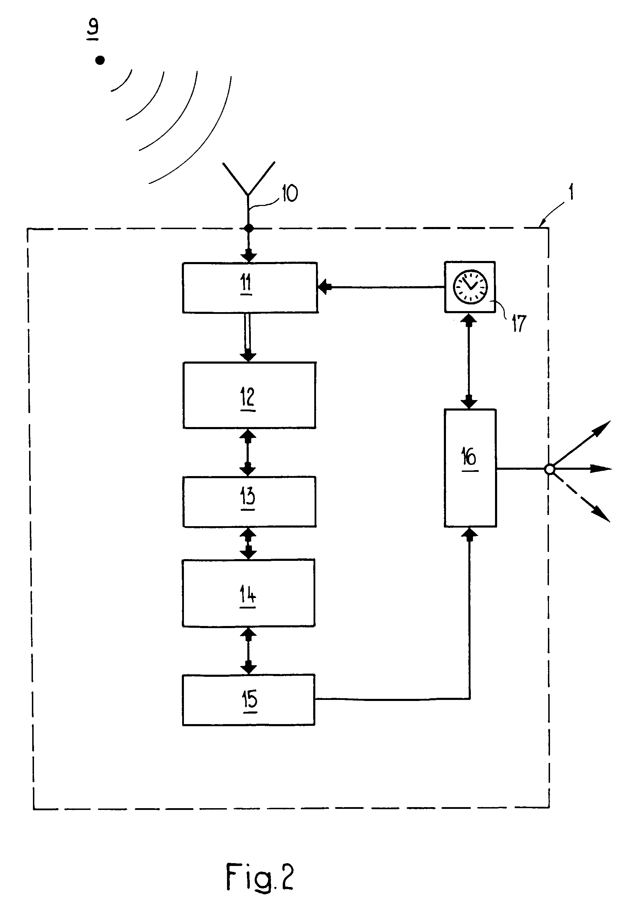

Fig. 2 zeigt ein Blockschaltbild z. B. der Station 1. Die lokal empfangbaren Signale werden mit einer an sich bekannten Antenne 10 (bzw. einer Antennenanordnung) detektiert und von einem Vielkanalempfänger 11 erfasst. Der Vielkanalempfänger 11 verfügt über eine grosse Anzahl von (z. B. 800) Frequenzkanälen (mit einer Breite von z. B. jeweils 100 Hz bis 1 KHz) und ermöglicht dadurch die kontinuierliche Ueberwachung eines grösseren Frequenzbandes (Frequenzfenster). Das Frequenzfenster kann auch grösser als die maximale Bandbreite des Vielkanalempfängers sein. In diesem Fall wird es schrittweise abgescant (d. h. die Mittenfrequenz des Empfängers wird in vorgegebenen Zeitabständen und Frequenzstufen erhöht).

Ein solcher Empfänger vermeidet den bei der üblichen Wobbel-Methode (Absuchen eines Bandes mit einem schmalbandigen durchlaufenden Filter) vorhandenen Nachteil, dass die Suchgeschwindigkeit proportional zum Quadrat der für die Auflösung gewünschten Bandbreite ist. Beim Vielkanalempfänger 11 (bei welchem - wie bereits erwähnt - sehr viele Kanäle gleichzeitig parallel überwacht werden nach dem Prinzip einer Filterbank) ist die "Suchgeschwindigkeit" umgekehrt proportional zur Auflösungsbandbreite.

Das zu überwachende Frequenzfenster kann vorzugsweise eingestellt werden (bezüglich Mittenfrequenz und Bandbreite). Es ist jedoch nicht so, dass für jede Senderortung ein bestimmtes Frequenzfenster kommandiert wird (wie beim eingangs zitierten Stand der Technik). Vielmehr wird das Frequenzfenster für eine längere Zeit konstant gehalten.

Die lokal empfangenen Signale werden in Form von digitalen Signalproben in einem Speicher 12 abgelegt. Jede Signalprobe ist zumindest durch eine Frequenz, einen Empfangszeitpunkt und eine Einfallsrichtung (Azimut) definiert. Der Empfangszeitpunkt wird aufgrund einer Uhr 17 (Taktsignalgenerator) festgelegt. Die Uhr 17 ist synchronisiert mit den Uhren der anderen Stationen, so dass das ganze System eine gemeinsame Zeitbasis aufweist. Neben den drei erwähnten Signalparametern (Frequenz, Zeit, Azimut) kann ev. auch die Amplitude bzw. Leistung, die Modulation oder eine sonstige Grösse gemessen und abgespeichert werden.

Ein Rechner 13 generiert mit Hilfe eines Mustererkennungsprogramms Signalsegmente (bzw. Muster) aus den abgespeicherten Signalproben, charakterisiert die Signalsegmente auf der Basis von vorgegebenen Signaturparametern und speichert das Ganze in einem Speicher 14 ab. Ein Signalsegment enthält in der Regel eine Vielzahl (z. B. zehn bis einige hundert) Signalproben. Die Ermittlung der Signaturparameter bringt also (auch) eine Datenreduktion mit sich.

Für die Ortung ist ein Rechner 15 vorgesehen, welcher einerseits Zugriff auf den Speicher 14 hat und andererseits über eine Steuereinheit 16 Daten von anderen Stationen anfordern kann. Er enthält weiter Programme zur Durchführung der goniometrischen Ortung aufgrund von z. B. drei zusammengehörenden Signalsegmenten verschiedener Stationen.

Die Steuereinheit 16 ist für die Kontrolle der internen Abläufe (innerhalb der Station 1) und die Kommunikation mit den übrigen Stationen verantwortlich. Sie kann z. B. die Funktion einer Zentrale im Netz der Stationen 1, 2, 3, 4 wahrnehmen.

Es versteht sich, dass die Speicher 12 und 14 keine physikalisch getrennten Einheiten zu sein brauchen. Dasselbe gilt für die Rechner 13, 15 und die Steuereinheit 16. Ebenfalls sei erwähnt, dass Bildschirm, Tastatur und sonstige Eingabe/Ausgabegeräte vorhanden sein können (welche in Fig. 2 allerdings nicht gezeigt sind). Die Rechen- und Speichereinheiten können durch eine an sich bekannten Tischstation (Workstation o. dgl.) bereitgestellt werden. Bevorzugt sind Parallelrechner. Bei diesen wird die Rechenleistung durch mehrere parallel arbeitende (Mikro- bzw. Signal-)Prozessoren erbracht. Diese können anwendungsspezifisch programmiert werden und erbringen entsprechend hohe Leistungen.

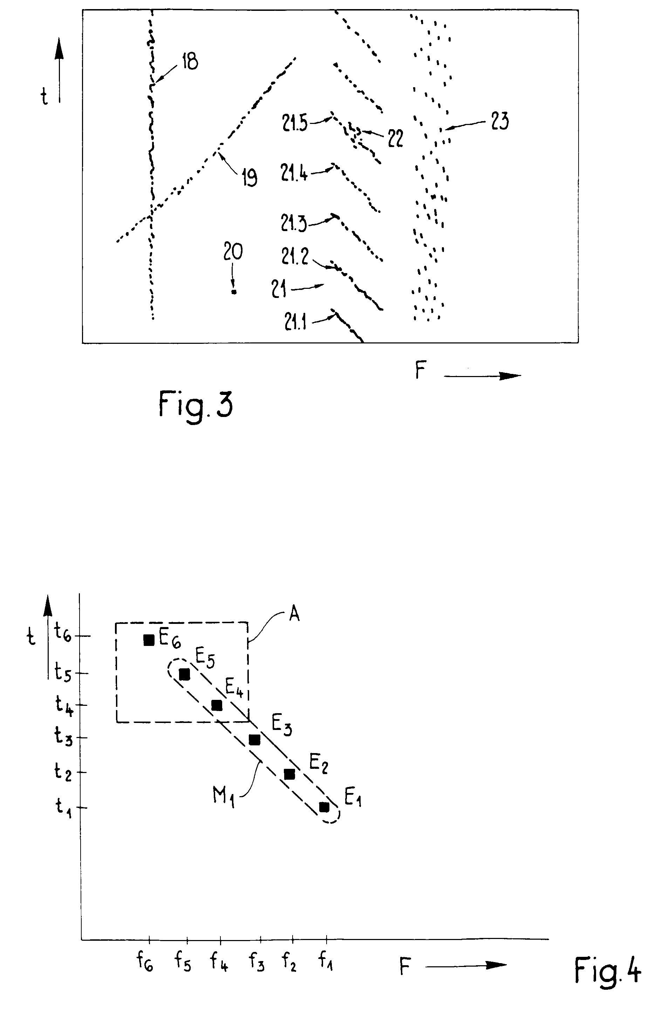

Im folgenden sollen nun beispielhaft Verfahren zur Durchführung der erfindungsgemässen Senderortung erläutert werden. Fig. 3 zeigt schematisch einige mögliche Signalmuster in einem Zeit/Frequenzdiagramm. Mit 18 ist ein für einen frequenzstationären Sender typisches Signalmuster dargestellt. Mit 19 ist ein Signalmuster bezeichnet, dass sich im wesentlichen linear mit der Zeit ändert. Zu berücksichtigen ist auch ein Signalmuster 20, welches z. B. nichts anderes als eine Störung ist. Mit 21 ist ein Signalmuster angedeutet, welches aus einer Vielzahl von Chirps 21.1, ..., 21.5 besteht. Jeder einzelne Chirp ist z. B. eine zeitlich lineare Veränderung der Frequenz. Auch hier können natürlich Störungen 22 auftreten. Das Signalmuster 23 stellt sinngemäss die "Spur" eines FH-Senders dar.

Die genannten Signalmuster 18, ... 23 können sich natürlich teilweise überlappen (Kollision). Das Ziel der Erfindung ist eine automatische Ortung von frequenzstationären und beliebig frequenzagilen Sendern.

Zur Durchführung der Segmentation (Mustererkennung) sind diverse Verfahren denkbar. Im folgenden werden - im Sinne bevorzugter Ausführungsformen - zwei mögliche Verfahren erläutert, nämlich die "dynamische Segmentation" und die "Segmentation mittels Projektion". Die "dynamische Segmentation" geht aus von bereits bestehenden (und ergänzungsfähigen) Signalsegmenten und prüft, ob eine bestimmte Signalprobe einem dieser Signalsegmente zugeordnet werden kann. Das Zuordnungskriterium ist z. B. eine Abstandsfunktion im Signalparameterraum. Ist keine Zuordnung möglich, so wird die Signalprobe als neues Signalsegment eingeordnet und als ergänzungsfähiges Signalsegment bei der Zuordnung späterer Signalproben berücksichtigt. Es ist einleuchtend, dass auf diese Weise die Signalsegmente dynamisch (d. h. mit fortschreitendem Verlauf der Datenverarbeitung) aufgebaut werden.

Beim Zuordnen einer Signalprobe zu den bestehenden Signalsegmenten kann z. B. untersucht werden, von welchem Signalsegment die erwähnte Signalprobe den kleinsten Abstand hat. Die Signalprobe wird dann demjenigen Signalsegment zugeordnet, zu welchem der kleinste Abstand besteht. Falls der Abstand eine vorgegebene maximale Grösse überschreitet, kann z. B. auf eine Zuordnung verzichtet und stattdessen ein neues Signalsegment eröffnet werden.

Es kann aber durchaus auch sinnvoll sein, eine Signalprobe mehreren verschiedenen Signalsegmenten zuzuordnen, wenn keine eindeutige Zuordnung möglich ist. So können sich z. B. die Abstände zu zwei verschiedenen Signalsegmenten als etwa gleich gross herausstellen. Eine Zuordnung zu nur einem der beiden Segmente könnte dann möglicherweise nur durch die Zufälligkeit einer (stets mitzuberücksichtigenden) Störung gegeben sein. Eine Mehrfachzuordnung ist namentlich bei Signalkollisionen möglich und sinnvoll.

Fig. 3 veranschaulicht, dass bei vielen Signalmustern eine Kontinuität in der Frequenz bzw. der Frequenzänderung vorhanden ist. Diese Erkenntnis kann dazu eingesetzt werden, einfache Voraussagen hinsichtlich möglicher Signalparameterwerte der nächsten Signalprobe eines Signalsegments zu machen. So kann z. B. eine mittlere Frequenzänderung zwischen benachbarten Signalproben desselben Segments ermittelt werden, um nur solche Signalproben anzufügen, die zur letzten Signalprobe des Segments im wesentlichen diese Frequenzänderung aufweisen.

Das Gesagte soll nun anhand der Fig. 4 veranschaulicht werden. Angenommen fünf Signalproben $E_1$, ..., $E_5$ (welche durch die Zeitpunkte $t_1$, ..., $t_5$, die Frequenzen $f_1$, ..., $f_5$ und - nicht dargestellt - Azimute $\beta_1$, ..., $\beta_5$ definiert sind) sind bereits einander zugeordnet worden und bilden das Segment $M_1$.

Bei der Bearbeitung der Signalprobe $E_6$ geht es nun um die Entscheidung, ob diese dem Segment $M_1$ zugeordnet werden kann oder nicht.

Eine Möglichkeit besteht nun darin, dass eine Abstandsfunktion A definiert wird, die z. B. ausgehend von der letzten Signalprobe $E_5$ ein Fenster definiert, innerhalb dessen die Signalprobe $E_6$ liegen muss, damit sie dem Segment $M_1$ zugeordnet werden kann. Die Abstandsfunktion kann z. B. durch einen frequenzmässigen und einen zeitlichen Abstand (rechteckiges Fenster) definiert sein. Die Grösse des Abstandes in der Frequenz und in der Zeit kann z. B. aufgrund der bereits zum Segment $M_1$ gehörenden Signalproben $E_1$, ..., $E_5$ festgelegt sein.

Mitberücksichtigt werden kann u. U. auch der bisherige Verlauf des Segments, indem z. B. eine mittlere Aenderung der Frequenz pro Zeitintervall berechnet wird und geprüft wird, ob die Signalprobe $E_6$ (bis auf einen störungsbedingten Fehler) an der erwarteten Stelle auftritt.

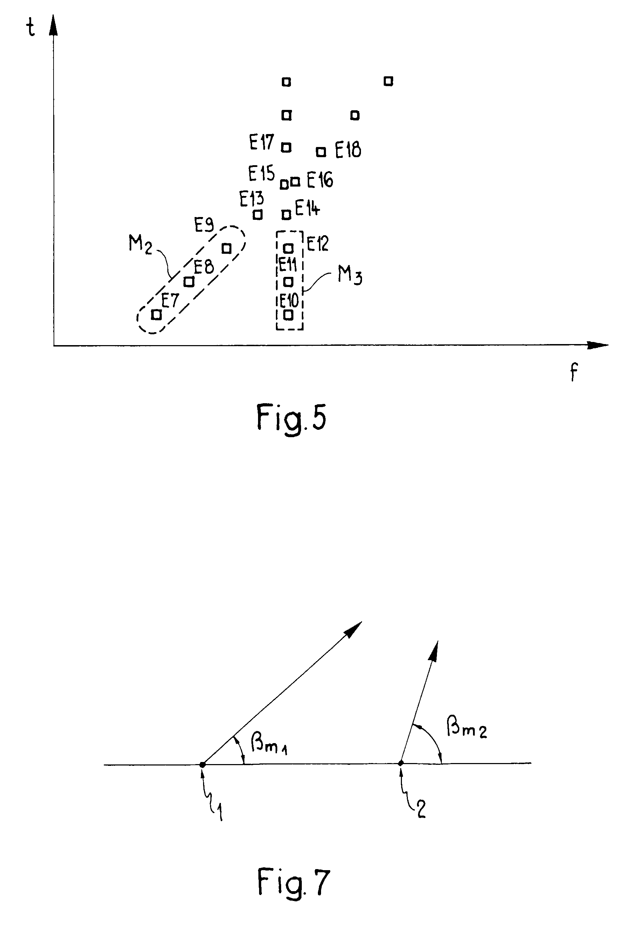

Die Schätzung der nächsten Signalprobe aufgrund der bereits in einem Segment vorhandenen kann für die Auflösung von Kollisionen wichtig sein. In der Darstellung gemäss Fig. 5 ist z. B. ein erstes Segment $M_2$ durch die Signalproben $E_7$, $E_8$, $E_9$ und ein Segment $M_3$ durch die Signalproben $E_{10}$, $E_{11}$, $E_{12}$ gebildet. Bei der Entscheidung, welchem Segment die Signalprobe $E_{13}$ anzufügen ist, kann ein reines Abstandskriterium allein nicht weiterhelfen, da der Abstand zu beiden Segmenten $M_2$, $M_3$ etwa gleich gross ist. Wenn jedoch berücksichtigt wird, dass sich die Frequenz von Signalprobe zu Signalprobe im Segment $M_2$ fortlaufend ändert, während z. B. das Segment $M_3$ bisher auf konstanter Frequenz war, dann ist die Signalprobe $E_{13}$ eindeutig dem Segment $M_2$ zuzuordnen. Sinngemäss wird die Signalprobe $E_{14}$ dem Segment $M_3$ zuzuordnen sein. Erst bei den Signalproben $E_{15}$, $E_{16}$ ist eine eindeutige Zuordnung in der Praxis nicht mehr möglich. Trotzdem werden die nachfolgenden Signalproben $E_{17}$, $E_{18}$ mit grösster Wahrscheinlichkeit den entsprechenden Segmenten $M_3$ resp. $M_2$ korrekt zugeordnet werden können (durch die bereits erwähnte Vorausberechnung bzw. Extrapolation der Segmente $M_2$, $M_3$).

Was hier anhand der Signalparameter Zeit und Frequenz erläutert worden ist, ist natürlich sinngemäss auf das Azimut oder weitere Signalparameter auszudehnen. Es ist klar, dass die in Fig. 5 beispielhaft dargestellte Signalkollision nur dann kritisch ist, wenn die beiden Signale auch vom Azimut her schlecht oder kaum unterscheidbar sind. In vielen Fällen wird eine Signaltrennung allein schon aufgrund unterschiedlicher Azimutwerte möglich sein. U. U. kann die zusätzlich erfasste Amplitude bzw. Leistung des empfangenen Signals ein Unterscheidungskriterium bieten.

Ein Abstand $d3_{i,j}$ zwischen der Signalprobe i und dem Segment j lässt sich z. B. wie folgt definieren:

$$(I) \qquad d3_{i,j} = g * d1_{i,j} * P + (1-g) * d2_{i,j} * P$$

$$\text{falls } d1 < e_{azimut} \text{ und } d2 < e_{freq}$$

$$+\infty \text{ sonst}$$

wobei

g = Gewichtungsfaktor
P = Leistungsfaktor

g ist ein Gewichtungsfaktor zwischen 0 und 1 und erlaubt, die Frequenzdifferenz in bezug auf die Winkeldifferenz zu gewichten. P ist ein Leistungsfaktor zwischen 0 und $\infty$ und dient zur besseren Differenzierung von kleinen und grossen Abweichungen bzw. Verschiebungen. $d1_{i,j}$ stellt den winkelmässigen Abstand zwischen der Signalprobe i und dem Segment j dar:

$$(II) \qquad d1_{i,j} = |\beta_i - \beta_j| \text{ falls } |\beta_i - \beta_j| < 180°$$

$$= 360 - |\beta_i - \beta_j| \text{ sonst}$$

Der Winkel $\beta_i$ ist das gemessene Azimut der Signalprobe i. Der Winkel $\beta_j$ ist der mittlere Wert des Azimuts der im Segment j befindlichen Signalproben.

Der Abstand $d2_{i,j}$ zwischen der Signalprobe i und dem Segment j ist wie folgt definiert:

$$(III) \qquad d2_{i,j} = |h_j(t_k) - f_i|$$

$$(IV) \qquad h_j(t_k) = f_{k-1} + dh_j(t_{k-1}) * (t_k - t_{k-1})$$

$$(V) \qquad dh_j(t_{k-1}) = M * df_j(t_{k-1}) + (1- M) * dh_j(t_{k-2})$$

M = Gewichtungsfaktor

$$(VI) \qquad df_j(t_{k-1}) = \frac{f_{k-1} - f_{k-2}}{t_{k-1} - t_{k-2}}$$

Annahme: $t_k > t_{k-1} > t_{k-2} > ...$

$h_j(t_k)$ ist im Prinzip die Schätzung der Frequenz für den Zeitpunkt $t_k$ gestüzt auf die Frequenzänderung $dh_j(t_{k-1})$ pro Zeit (jeweils bezogen auf das Segment j). M ist ein Gewichtungsfaktor zwischen 0 und 1 und dient dazu, die Bedeutung der letzten Signalproben des Segments im Verhältnis zu den früheren im Hinblick auf die Schätzung der Frequenzänderung z. B. schwächer zu gewichten. Die Berechnung der Grössen $h_j(t_k)$ und $dh_j(t_{k-1})$ erfolgt rekursiv aufgrund der letzten Signalproben $E_{k-1} = (\beta_{k-1}, f_{k-1}, t_{k-1})$, $E_{k-2} = (\beta_{k-2}, f_{k-2}, t_{k-2})$ etc. des Segments j. $e_{azimut}$ und $e_{freq}$ sind geeignet gewählte Grenzwerte, welche verhindern, dass unmögliche bzw. unwahrscheinliche Zuordnungen vorgenommen werden.

Wie bereits die Darstellung gemäss Fig. 3 klar macht, werden zu einem bestimmten Zeitpunkt mit grosser Wahrscheinlichkeit mehrere Signalproben mit unterschiedlichen Frequenzen erfasst werden. Die Zuordnung der einzelnen Signalproben kann u. U. nicht vollständig unabhängig von den anderen Signalproben stattfinden. D. h. die Segmentation ist auch ein umfassender Optimierungsprozess (optimale Verteilung von mehreren Signalproben auf die verschiedenen Segmente).

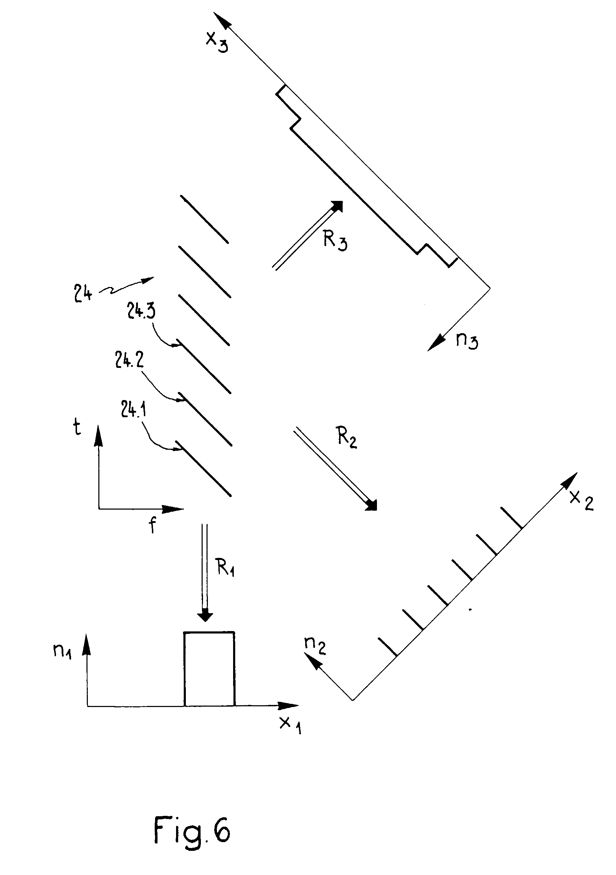

Ein anderes Verfahren zur Durchführung der Segmentation ist in Fig. 6 veranschaulicht. Mit 24 ist ein typisches Signalmuster eines Chirp-Senders bezeichnet. Es weist eine Mehrzahl von Chirps bzw. Frequenzrampen 24.1, 24.2, 24.3 auf (welche jeweils aus einer Vielzahl von diskreten Signalproben gebildet sind). Anstelle der dynamischen Segmentation im Sinne der Fig. 4 und 5 kann die Segmentation und Charakterisierung durch Projektion erfolgen. In der z. B. durch Frequenz- und Zeitachse aufgespannten Ebene (zweidimensionaler Raum) wird z. B. eine Projektion in Richtung $R_1$ auf eine Achse $X_1$ (eindimensionaler Raum) durchgeführt. Es entsteht eine Häufigkeitsverteilung $n_1$ der Signalproben. Dasselbe wird für eine Vielzahl von anderen Richtungen (z. B. Richtung $R_2$ und $R_3$ auf Achsen $X_2$ bzw. $X_3$) durchgeführt.

Beim Signalmuster 24 entstehen drei charakteristische Häufigkeitsverteilungen $n_1$, $n_2$, $n_3$. (Häufigkeitsverteilungen durch Projektion in nicht charakteristischen Richtungen sind der Einfachheit halber nicht dargestellt.) Die Häufigkeitsverteilung $n_1$ zeichnet sich durch die geringste Ausdehnung senkrecht zur Projektionsrichtung $R_1$ aus. Die Häufigkeitsverteilung $n_2$ zeichnet sich durch eine Mehrzahl von getrennten Häufigkeitsmaxima und die Häufigkeitsverteilung $n_3$ durch eine ziemlich breite und konstante Kurve aus.

Von Interesse ist die Tatsache, dass jedes Signalmuster seine eigenen charakteristischen Richtungen hat, die zu einer leicht identifizierbaren Häufigkeitsverteilung führen. Der durch Azimut, Frequenz und Zeit aufgespannte (dreidimensionale) Signalparameterraum kann auf diese Weise als Ganzes (d. h. mit allen Signalproben) in eine Vielzahl vorgegebener unterschiedlicher Richtungen projiziert werden. Die vorhandenen Signalmuster können auf diese Weise aus dem "Gesamtbild" ermittelt werden. Wird die Projektionsmethode in verschiedenen Stationen angewandt, dann können gemeinsame Signalmuster durch Korrelation der Häufigkeitsverteilungen ("Projektionsbilder") extrahiert werden. Auch für die Häufigkeitsverteilungen sind gemäss der Erfindung Signaturparameter zu definieren (Ausdehnung, Schwerpunkte, Grössenverhältnisse etc.).

Wenn die Segmentationsphase in den verschiedenen Stationen abgeschlossen ist, muss zur Durchführung der Triangulation ein Datenaustausch zwischen den Stationen erfolgen. Der Datenaustausch liefert die Grundlagen für das Vergleichen und Kombinieren der Segmente verschiedener Stationen (pattern matching). Um einerseits die Datenübertragung zu minimieren und andererseits den Rechenaufwand zum Vergleichen und Finden von zusammengehörenden Signalsegmenten zu optimieren, werden gemäss der Erfindung jedem Signalsegment mehrere sog. Signaturparameterwerte zugeordnet. Die Signaturparameterwerte haben nicht zwingend eine eindeutige Bestimmung des entsprechenden Signalsegments zum Ziel. Vielmehr sollen sie in erster Linie eine schnelle und leichte Vergleichsmöglichkeit zwischen zwei Signalsegmenten ermöglichen. Die Signaturparameterwerte sollen insbesondere eine klare Unterscheidung von Signalsegmenten ermöglichen, die nicht zur Ortung kombiniert werden dürfen. Sie ermöglichen also eine negative Auswahl. In vielen Fällen wird diese negative Auswahl schon so weit gehen, dass die verbleibenden, nicht eliminierten Signalsegmentpaarungen bzw. -gruppierungen eine erfolgreiche Ortung erlauben, ohne dass eine "punktweise" Korrelation der Signalsegmente erforderlich ist.

Die Signaturparameter können von jeder einzelnen Station unabhängig von den anderen Stationen berechnet werden. Im folgenden werden leicht zu ermittelnde Signaturparameter aufgezählt:

$t_A$ = Anfangszeitpunkt des Signalsegments

$t_E$ = zeitliches Ende des Signalsegments

$f_A$ = kleinste Frequenz des Signalsegments

$f_E$ = grösste Frequenz des Signalsegments

$\beta_A$ = kleinstes Azimut des Signalsegments

$\beta_E$ = grösstes Azimut des Signalsegments

Mit diesen sechs Parametern können die äussersten Grenzen eines Signalsegments im z. B. dreidimensionalen Signalparameterraum (Azimut, Frequenz, Zeit) definiert werden. U. U. kann es von Vorteil sein, den "Schwerpunkt" (definiert durch eine mittlere Zeit $t_m$, eine mittlere Frequenz $f_m$ und ein mittleres Azimut $\beta_m$) zu bestimmen.

Zwei weitere, einfach zu bestimmende Werte sind die Summen der positiven und der negativen Frequenzdifferenzen:

$$(VII) \quad S_+ = \Sigma\, S_{i+} \qquad\qquad S_- = \Sigma\, S_{i-}$$
$$f_i - f_j < 0 \qquad\qquad f_i - f_j \geq 0$$

$$(VIII) \qquad S_{i,+} = \frac{|f_i - f_{i-1}|^q}{|t_i - t_{i-1}|^{q-1}} \qquad \text{falls } f_i - f_{i-1} < 0$$

$$(IX) \qquad S_{i,-} = \frac{|f_i - f_{i-1}|^q}{|t_i - t_{i-1}|^{q-1}} \qquad \text{falls } f_i - f_{i-1} \geq o$$

Die eine Summe $S_+$ fasst also alle positiven und die andere $S_-$ alle negativen Frequenzdifferenzen zusammen, wobei die Differenzen jeweils mit einer geeignet gewählten Potenz q (z. B. q = 2) potenziert werden, um grössere Frequenzverschiebungen gegenüber kleineren (ev. nur störungsbedingten) stärker zu gewichten.

Weiter kann als Signaturparameter auch die mittlere zeitliche Aenderung (Steigung) des Frequenzverlaufs verwendet werden. Von Interesse kann auch die Anzahl N der Signalproben im entsprechenden Segment sein. Schliesslich können auch die Signalwerte ausgewählter Signalproben als Signaturparameterwerte verwendet werden. So kann z. B. der ersten (bzw. den ersten zwei, drei etc.) und der letzten (bzw. den letzten zwei, drei etc.) Signalprobe(n) bewusst eine besondere Bedeutung beigemessen werden.

Jedes Signalsegment ist also durch einen Satz von Signaturparameterwerten begleitet. Bei der Auswertung und Ortung wird zunächst nur dieser Satz (und nicht alle Signalproben) an eine Station übermittelt, welche mit der Auswertung und Ortung beauftragt ist. Dort wird der übermittelte Satz mit den Signaturparametern der lokal erfassten Signalsegmente verglichen. Der Vergleich eliminiert in erster Linie unmögliche Segmentpaarungen. Bleibt bei dieser Auswertung nur eine mögliche Segmentpaarung, dann erübrigt sich eine Uebermittlung des ganzen Signalsegments von der ersten an die zweite Station. Die zweite Station kann dann Anfragen an weitere Stationen starten, um ein drittes Signalsegment zu finden, welches sich dem gefundenen Segmentpaar zuordnen lässt. Wird ein solches Segment bei einer anderen Station gefunden, kann die Triangulation des Senders durchgeführt werden.

Die Ueberprüfung der Kombinierbarkeit von zwei Segmenten i und j soll am Beispiel des mittleren Winkels $\beta_{m,i}$ und $\beta_{m,j}$ anhand der Fig. 7 beispielhaft erläutert werden. Mit 1 ist der Ort der Station 1 und mit 2 der Ort der Station 2 dargestellt. Die Azimute sind so definiert, dass die Station 2 unter dem Winkel 0° bezüglich der Station 1 liegt (bzw. die Station 1 unter dem Winkel 180° bezüglich der Station 2). Die beiden Signalsegmente i und j sind nur dann kombinierbar, wenn

$$(X) \qquad 0 < (\beta_{m,j} - \beta_{m,i}) < (180 - \beta_{m,i})$$

Weiter ist z. B. zu prüfen, ob die von den Signalsegmenten i und j beanspruchten Zeitabschnitte nicht soweit auseinanderliegen, dass sie unmöglich zur gleichen Zeit vom gleichen Sender kommen können. Zu berücksichtigen ist dabei die maximale Laufzeitdifferenz, mit welcher ein Signal bei den beiden Stationen eintreffen kann. Liegt das zeitliche Ende $t_E$ des einen Signalelements mehr als die maximale Laufzeitdifferenz vor dem zeitlichen Anfang $t_A$ des anderen, dann muss eine Kombination der Segmente ausgeschlossen werden.

Die Signalproben eines Sendersignals können bei verschiedenen Stationen in unterschiedliche, insbesondere unterschiedlich grosse Signalsegmente gruppiert sein. D. h. es kann nicht a priori davon ausgegangen werden, dass die möglicherweise kombinierbaren Segmente gleichviele Signalproben, gleiche Frequenzbereiche und/oder gleiche Zeitbereiche abdecken. Wenn aber z. B. die Frequenzbereiche zweier Signalsegmente sich nicht überschneiden, dann muss eine Kombination ebenfalls ausgeschlossen werden. Die Auswertung geht also so vor sich, dass zunächst alle Signaturparameterwerte nach möglichen Inkompatibilitäten untersucht werden. Sollte nach Eliminierung aller unmöglichen Paarungen immer noch Mehrdeutigkeit bestehen, dann kann gewünschtenfalls eine "punktweise" Korrelation durchgeführt werden.

Gemäss der Erfindung erfolgt die Auswertung und Triangulation vorzugsweise dezentral. D. h. der auszuwertende Signalparameterraum wird von einem Steuer- bzw. Koordinationsprogramm in mehrere Teilräume aufgeteilt, so dass die Auswertung der Teilräume auf verschiedene Stationen verteilt werden kann. Jede Station wird also den ihr zugewiesenen Teilraum (z. B. einen gewissen Winkel- und/oder Frequenzteilbereich) in eigener Regie auswerten. Sie wird bei den anderen Stationen nach Segmenten im auszuwertenden Teilraum fragen, sich die Signaturparameterwerte übermitteln lassen und zusammengehörende Signalsegmente (nach dem weiter oben erläuterten Verfahren) kombinieren und auf deren Basis die Triangulation errechnen. Das Ergebnis kann dem Steuerprogramm mitgeteilt werden und/oder jeder Station (z. B. zur Anzeige auf einem Bildschirm) zur Verfügung gestellt werden.

Die Aufteilung des Signalparameterraums in Teilräume erfolgt vorzugsweise dynamisch entsprechend der Anzahl vorhandener Signalsegmente. Das Steuerprogramm erfragt z. B. bei den Stationen die Anzahl der ermittelten Signalsegmente und deren ungefähre Lage im Signalparameterraum. Die Grösse der Teilräume (Winkelbereich, Frequenzteilbereich) kann dann so festgelegt werden, dass die Auswertung der verschiedenen Teilräume Rechenleistung in derselben Grössenordnung erfordert. Die ermittelten (ev. unterschiedlich grossen) Teilräume (z. B. 0°-180°, 180°-270°, 270°-360°) werden dann den Stationen zur selbständigen Auswertung zugewiesen.

Die erläuterten Ausführungsbeispiele können selbstverständlich in diversen Aspekten abgewandelt bzw. an die konkreten Umstände angepasst werden. Die Wahl geeigneter Abstandskriterien und Grenzwerte kann z. B. auf die in einem konkreten Ueberwachungsnetz typischerweise auftretenden Signalkonstellationen eingestellt werden, um die Segmentation zu beschleunigen. Je nach Grösse des zu überwachenden Frequenzbereichs wird sich auch die Auflösung eines bestimmten Vielkanalempfängers ändern. U. U. kann aber auch die Auflösung nachträglich, d. h. auf digitaler Stufe verkleinert werden, indem im Signalparameterraum mehrere benachbarte Signalzustände zusammengefasst werden. So können z. B. vier benachbarte Frequenzen zu einem "Element" zusammengefasst werden. Die Bestimmung der Signalsegmente und Signaturparameter basiert dann auf solchen "Elementen" und nicht auf einzelnen Signalproben.

Für die Ortung können auch die Laufzeitunterschiede berücksichtigt werden, die sich durch die endliche Ausbreitungsgeschwindigkeit der Sendersignale und die unterschiedlichen Distanzen zu den verschiedenen Stationen ergeben.

Die Programme können in Form "konventioneller" Software auf Standardrechnern vorliegen. Für eine schnelle und anwendungsspezifische Datenverarbeitung kann es jedoch auch sinnvoll sein, spezielle Recheneinheiten wie z. B. Signalprozessoren oder anwendungsspezifische Halbleiterelemente einzusetzen. Es sei in diesem Zusammenhang auf neuronale Bildverarbeitungsstrukturen, Vektorrechner etc. hingewiesen.

Auch wenn ein Netz aus gleichwertigen Stationen bevorzugt wird, ist nicht ausgeschlossen, dass eine konventionelle hierarchische Struktur (Zentrale/untergeordnete Aussenstationen) implementiert werden kann.

Insgesamt ergibt sich, dass das erfindungsgemässe Verfahren zur Ortung von beliebigen frequenzagilen Sendern geeignet ist und durch die dezentrale Signalerfassung und -auswertung eine hohe Verarbeitungskapazität hat. Die erfindungsgemässen Signaturparameter erlauben eine Optimierung des Datenübertragungs- und -auswerteprozesses.

**Patentansprüche**

1. Verfahren zum Orten von insbesondere frequenzagilen Sendern mit mehreren räumlich verteilten Stationen (1, 2, 3, 4) mit gemeinsamer Zeitbasis, dadurch gekennzeichnet, dass

   a) jede dieser Stationen (1, 2, 3, 4) eigenständig eine Signalerfassung mittels eines Vielkanalempfängers (11) durchführt, wobei alle lokal empfangbaren Signale eines ganzen Frequenzbereichs in Form digitaler Signalproben ($E_1$, $E_2$, ...) in einem Signalparameterraum erfasst werden,

   b) in jeder Station (1, 2, 3, 4) die Signalproben ($E_1$, $E_2$, ...) mit Hilfe eines Mustererkennungsprogramms automatisch in Signalsegmente gruppiert werden und

   c) die Sender (9) durch Kombinieren gleichartiger Signalsegmente aus verschiedenen Stationen (1, 2, 3, 4) goniometrisch geordnet werden.

2. Verfahren nach Anspruch 1, dadurch gekennzeichnet, dass die Signalsegmente auf der Basis von mehreren vorgegebenen Signaturparametern ($t_A$, $t_E$, $f_A$, $f_E$, ...) durch einen Satz von Signaturparameterwerten charakterisiert werden und dass das Kombinieren der Signalsegmente auf der Basis dieser Signaturparameterwerte erfolgt.

3. Verfahren nach Anspruch 2, dadurch gekennzeichnet, dass als Signaturparameter mehrere der folgenden Grössen verwendet werden:

   $t_A$ = Anfangszeitpunkt des Signalsegments
   $t_E$ = Endzeitpunkt des Signalsegments
   $f_A$ = kleinste Frequenz des Signalsegments
   $f_E$ = grösste Frequenz des Signalsegments
   $\beta_A$ = kleinstes Azimut des Signalsegments
   $\beta_E$ = grösstes Azimut des Signalsegments
   $S_-$ = Summe der negativen Frequenzdifferenzen
   $S_+$ = Summe der positiven Frequenzdifferenzen

n = Anzahl der Signalproben im Signalsegment

$\beta_m$ = mittlerer Wert des Azimuts der Signalproben im Signalsegment

h = mittlere zeitliche Aenderung des Frequenzverlaufs innerhalb des Signalsegments

4. Verfahren nach einem der Ansprüche 1 bis 3, dadurch gekennzeichnet, dass das Mustererkennungsprogramm die Segmente dynamisch aufbaut, indem ausgehend von einer ersten Signalprobe ($E_s$) sukzessive weitere Signalproben ($E_6$) assoziiert werden.

5. Verfahren nach Anspruch 4, dadurch gekennzeichnet, dass das Assoziieren der Signalproben ($E_6$) auf der Basis eines Abstandskriteriums ($d3_{i,j}$) und/oder von Signaturparametern erfolgt.

6. Verfahren nach Anspruch 4 oder 5, dadurch gekennzeichnet, dass das Mustererkennungsprogramm eine Signalprobe höchstens einem Signalsegment zuordnet.

7. Verfahren nach Anspruch 4 oder 5, dadurch gekennzeichnet, dass das Mustererkennungsprogramm eine Signalprobe ($E_{15}$, $E_{10}$) mindestens einem Signalsegment ($M_2$, $M_3$) zuordnet.

8. Verfahren nach einem der Ansprüche 1 bis 3, dadurch gekennzeichnet, dass das Mustererkennungsprogramm die Signalsegmente durch Projektion eines Signalparameterraums in mehrere verschiedene Projektionsräume ermittelt.

9. Verfahren nach Anspruch 8, dadurch gekennzeichnet, dass das Mustererkennungsprogramm in einer durch Zeit und Frequenz als Signalparameter aufgespannten Ebene auf mehrere unterschiedliche Achsen projiziert ($R_1$, $R_2$, $R_3$) und die Signalproben auf der Basis von Häufigkeitsverteilungen ($n_1$, $n_2$, $n_3$) in den projizierten Achsen gruppiert.

10. Verfahren nach einem der Ansprüche 1 bis 9, dadurch gekennzeichnet, dass die Signalsegmente in einer Datenbank der jeweiligen Station (1, 2, 3, 4) gespeichert und auf der Basis erfolgreicher Ortung zu Segmentgruppen kombiniert werden.

11. Verfahren nach einem der Ansprüche 1 bis 10, dadurch gekennzeichnet, dass ein erstes Signalsegment, das nicht eindeutig einem zweiten Signalsegment einer zweiten Station zugeordnet werden kann, punktweise mit Signalsegmenten anderer Peilstationen korreliert wird.

12. Verfahren nach einem der Ansprüche 1 bis 11, dadurch gekennzeichnet, dass ein Steuerprogramm den Signalparameterraum in Teilräume aufteilt und die Auswertung der verschiedenen Teilräume verschiedenen Stationen zuweist, wonach jede Station die Auswertung asynchron durchführt und selbst in Kontakt mit einzelnen oder mehreren anderen Stationen tritt, um die zur Ortung erforderlichen Signalsegmente zu ermitteln.

13. Verfahren nach Anspruch 12, dadurch gekennzeichnet, dass die Aufteilung in Teilräume flexibel entsprechend einer Verteilung der Signalsegmente erfolgt, um eine möglichst gleichmässige Auslastung der Stationen (1, 2, 3, 4) zu erreichen.

14. Anordnung zur Durchführung des Verfahrens zum Orten von insbesondere frequenzagilen Sendern mit einer Mehrzahl von räumlich verteilten, über ein Kommunikationssystem in Verbindung stehenden Stationen (1, 2, 3, 4) mit synchronisierten Uhren zur Schaffung einer gemeinsamen Zeitbasis (17), dadurch gekennzeichnet, dass jede Station (1)

a) einen Vielkanalempfänger (11) mit einer Vielzahl von parallel arbeitenden Kanälen aufweist, um alle lokal empfangbaren Signale eines ganzen Frequenzbereichs in Form digitaler Signalproben in einem Signalparameterraum zu erfassen,

b) einen Speicher (12) zum Abspeichern der Signalproben,

c) einen Rechner (13) mit einem Mustererkennungsprogramm, welches die erfassten Signalproben zu Signalsegmenten gruppiert,

d) ein Programm zur Charakterisierung der Signalsegmente mittels Signaturparameterwerte,

e) einen Speicher (14) für die Signalsegmente und Signaturparameterwerte und

f) einen Rechner (15) mit einem Programm, welches Signalsegmente verschiedener Stationen mit im wesentlichen gleichen Signaturparameterwerten einander zuordnet und die goniometrische Ortung der Sender (9) durchführt.

**Claims**

1.  Method for positioning, especially, frequency-agile transmitters by means of several spatially distributed stations (1, 2, 3, 4) having a common time base, characterised in that

    a) each of those stations (1, 2, 3, 4) carries out signal capture independently by means of a multi-channel receiver (11), all locally receivable signals of an entire frequency range being captured in the form of digital signal samples ($E_1$, $E_2$, ...) in a signal parameter space,

    b) in each station (1, 2, 3, 4) the signal samples ($E_1$, $E_2$, ...) are grouped automatically into signal segments by means of a pattern recognition programme and

    c) the transmitters (9) are sorted goniometrically by combining signal segments of the same kind from different stations (1, 2, 3, 4).

2.  Method according to claim 1, characterised in that the signal segments are characterised by a set of signature parameter values on the basis of several predetermined signature parameters ($t_A$, $t_E$, $f_A$, $f_E$, ...) and in that the signal segments are combined on the basis of those signature parameter values.

3.  Method according to claim 2, characterised in that several of the following variables are used as signature parameters:

    $t_A$ =     start time of the signal segment
    $t_E$ =     end time of the signal segment
    $f_A$ =     lowest frequency of the signal segment
    $f_E$ =     highest frequency of the signal segment
    $\beta_A$ =     smallest azimuth of the signal segment
    $\beta_E$ =     largest azimuth of the signal segment
    $S_-$ =     sum of the negative frequency differences
    $S_+$ =     sum of the positive frequency differences
    $n$ =     number of signal samples in the signal segment
    $\beta_m$ =     mean value of the azimuth of the signal samples in the signal segment
    $h$ =     mean time change of the frequency response curve within the signal segment.

4.  Method according to any one of claims 1 to 3, characterised in that the pattern recognition programme dynamically builds up the segments by, starting from a first signal sample ($E_s$), associating successive further signal samples ($E_6$).

5.  Method according to claim 4, characterised in that the association of the signal samples ($E_6$) is carried out on the basis of a distance criterion ($d3_{i, j}$) and/or signature parameters.

6.  Method according to claim 4 or 5, characterised in that the pattern recognition programme associates a signal sample with a maximum of one signal segment.

7.  Method according to claim 4 or 5, characterised in that the pattern recognition programme associates a signal sample ($E_{15}$, $E_{10}$) with at least one signal segment ($M_2$, $M_3$).

8.  Method according to any one of claims 1 to 3, characterised in that the pattern recognition programme establishes the signal segments by projecting a signal parameter space into several different projection spaces.

9.  Method according to claim 8, characterised in that the pattern recognition programme, in a plane defined by time and frequency in the form of signal parameters, projects onto several different axes ($R_1$, $R_2$, $R_3$) and groups the signal samples in the projected axes on the basis of frequency distributions ($n_1$, $n_2$, $n_3$).

10. Method according to any one of claims 1 to 9, characterised in that the signal segments are stored in a data bank of the particular station (1, 2, 3, 4) and combined to form segment groups on the basis of successful positioning.

11. Method according to any one of claims 1 to 10, characterised in that a first signal segment which cannot be associated clearly with a second signal segment of a second station is correlated point by point with signal segments of other direction-finding stations.

12. Method according to any one of claims 1 to 11, characterised in that a control programme divides the signal parameter space into sub-spaces and assigns the evaluation of the various sub-spaces to various stations, after which each station carries out the evaluation asynchronously and itself enters into contact with individual or several further stations in order to establish the signal segments necessary for the positioning operation.

13. Method according to claim 12, characterised in that the division into sub-spaces is carried out flexibly in accordance with a distribution of the signal segments in order to achieve as uniform a utilisation as possible of the stations (1, 2, 3, 4).

14. Arrangement for carrying out the method for positioning, especially, frequency-agile transmitters by means of a plurality of spatially distributed stations (1, 2, 3, 4) which are connected by a communication system and which have synchronised clocks for creating a common time base (17), characterised in that each station (1) has

> a) a multi-channel receiver (11) having a large number of channels operating in parallel, in order to capture all locally receivable signals of an entire frequency range in the form of digital signal samples in a signal parameter space,

> b) a memory (12) for storing the signal samples,

> c) a computer (13) having a pattern recognition programme which groups the captured signal samples into signal segments,

> d) a programme for characterising the signal segments by means of signature parameter values,

> e) a memory (14) for the signal segments and signature parameter values and

> f) a computer (15) having a programme which associates with one another signal segments of different stations having substantially the same signature parameter values and which carries out the goniometric positioning of the transmitters (9).

**Revendications**

1. Procédé pour localiser notamment des émetteurs agiles en fréquence au moyen de stations (1, 2, 3, 4) réparties dans l'espace et comportant une base de temps commune, caractérisé en ce que

> a) chacune de ces stations (1, 2, 3, 4) exécute de façon autonome une détection de signaux à l'aide d'un récepteur à canaux multiples (11), tous les signaux pouvant être reçus localement d'une gamme complète de fréquences étant détectés sous la forme d'échantillons de signaux numériques ($E_1$, $E_2$, ...) dans un espace de paramètres de signaux;
> b) dans chaque station (1, 2, 3, 4) les échantillons de signaux ($E_1$, $E_1$, ...) sont regroupés automatiquement dans des segments de signaux, à l'aide d'un programme de reconnaissance de formes, et
> c) les émetteurs (9) sont localisés par voie goniométrique par combinaison de segments de même type de signaux provenant de différentes stations (1, 2, 3, 4).

2. Procédé selon la revendication 1, caractérisé en ce que les segments de signaux sont caractérisés sur la base de plusieurs paramètres de signature ($t_A$, $t_E$, $f_A$, $f_E$, ...) au moyen d'un ensemble de valeurs de paramètres de signature et que la combinaison des segments de signaux s'effectue sur la base de ces valeurs de paramètres de signature.

3. Procédé selon la revendication 2, caractérisé en ce qu'on utilise comme paramètres de signature plusieurs des grandeurs indiquées ci-après:

$t_A$ = instant de départ du segment de signaux
$t_E$ = instant final du segment de signaux
$f_A$ = fréquence minimale du segment de signaux
$f_E$ = fréquence maximale du segment de signaux
$\beta_A$ = azimut minimum du segment de signaux
$\beta_E$ = azimut maximum du segment de signaux
$S_-$ = somme des différences négatives de fréquences
$S_+$ = somme des différences positives de fréquences
$n$ = nombre des échantillons de signaux dans le segment de signaux
$\beta_m$ = valeur moyenne de l'azimut des échantillons de signaux dans le segment de signaux
$h$ = variation moyenne dans le temps de l'allure en fréquence à l'intérieur du segment de signaux.

4. Procédé selon l'une des revendications 1 à 3, caractérisé en ce que le programme de reconnaissance de formes établit de façon dynamique les segments par association successive d'autres échantillons de signaux ($E_6$) à partir d'un premier échantillon de signaux ($E_s$).

5. Procédé selon la revendication 4, caractérisé en ce que l'association des échantillons de signaux ($E_6$) s'effectue sur la base d'un critère de distance ($d3_{i,j}$) et/ou de paramètres de signature.

6. Procédé selon la revendication 4 ou 5, caractérisé en ce que le programme de reconnaissance de formes associe un échantillon de signaux au maximum à un segment de signaux.

7. Procédé selon la revendication 4 ou 5, caractérisé en ce que le programme de reconnaissance de formes associe un échantillon de signaux ($E_{15}$, $E_{10}$) à au moins un segment de signaux ($M_2$, $M_3$).

8. Procédé selon l'une des revendications 1 à 3, caractérisé en ce que le programme de reconnaissance de formes détermine les segments de signaux par projection d'un espace de paramètres de signaux dans plusieurs espaces différents de projection.

9. Procédé selon la revendication 8, caractérisé en ce que le programme de reconnaissance de formes réalise une projection ($R_1$, $R_2$, $R_3$) dans un plan, qui est défini par le temps et la fréquence en tant que paramètres des signaux, sur plusieurs axes différents, et les échantillons de signaux sont regroupés, sur la base de distributions de fréquence ($n_1$, $n_2$, $n_3$) sur des axes projetés.

10. Procédé selon l'une des revendications 1 à 9, caractérisé en ce que les segments de signaux sont mémorisés dans une banque de données de la station considérée (1, 2, 3, 4) et sont combinés sur la base d'une localisation réussie, pour former des groupes de segments.

11. Procédé selon l'une des revendications 1 à 10, caractérisé en ce qu'un premier segment de signaux, qui ne peut pas être associé de façon nette à un second segment de signaux d'une seconde station, est corrélé de façon ponctuelle à des segments de signaux d'autres stations de localisation.

12. Procédé selon l'une des revendications 1 à 11, caractérisé en ce qu'un programme de commande divise l'espace des paramètres de signaux en des espaces partiels et affecte l'exploitation des différents espaces partiels à différentes stations, de telle sorte que chaque station effectue l'exploitation d'une manière asynchrone et entre elle-même en contact avec des stations individuelles ou plusieurs autres stations de manière à déterminer les segments de signaux, qui sont nécessaires pour la localisation.

13. Procédé selon la revendication 12, caractérisé en ce que la division en espaces partiels s'effectue d'une manière souple en fonction d'une distribution des segments de signaux, pour l'obtention d'une utilisation aussi uniforme que possible des stations (1, 2, 3, 4).

14. Dispositif pour la mise en oeuvre du procédé pour localiser des émetteurs notamment agiles en fréquence à l'aide d'une multiplicité de stations (1, 2, 3, 4) réparties dans l'espace et reliées par l'intermédiaire d'un système de communication, et comportant des horloges synchronisées pour la création d'une base de temps commune (17), caractérisé en ce que chaque station (1) comporte

a) un récepteur à canaux multiples (11) comportant une multiplicité de canaux travaillant en parallèle de manière à détecter tous les signaux pouvant être reçus localement d'une gamme complète de fréquences sous la forme d'échantillons de signaux numériques dans un espace de paramètres de signaux,

b) une mémoire (12) pour mémoriser les échantillons de signaux,

c) un calculateur (13) comportant un programme de reconnaissance de formes qui regroupe les échantillons de signaux détectés pour former des segments de signaux,

d) un programme pour caractériser les segments de signaux à l'aide de valeurs de paramètres de signature,

e) une mémoire (14) pour les segments de signaux et les valeurs de paramètres de signature, et

f) un calculateur (15) comportant un programme, qui associe entre eux des segments de signaux de différentes stations, présentant des valeurs de paramètres de signature essentiellement identiques et exécute le repérage goniométrique des émetteurs (9).

Fig.1

Fig.2

Fig.3

Fig.4

Fig.5

Fig.7

Fig. 6